# EUROPÄISCHE PATENTSCHRIFT

(11) **EP 2 994 664 B1**
(45) Veröffentlichungstag und Bekanntmachung des Hinweises auf die Patenterteilung: **13.06.2018**
(21) Anmeldenummer: 14725617.6
(22) Anmeldetag: 15.04.2014
(51) Int. Cl.: F16F 15/14

(54) **FLIEHKRAFTPENDEL**
CENTRIFUGAL FORCE PENDULUM
PENDULE CENTRIFUGE

(30) Priorität: 06.05.2013 DE 102013208229
(43) Veröffentlichungstag der Anmeldung: 16.03.2016
(73) Patentinhaber: Schaeffler Technologies AG & Co. KG, 91074 Herzogenaurach (DE)
(72) Erfinder: DINGER, Christian, 77886 Lauf (DE); HOFFMANN, Jan, 76437 Rastatt (DE)
(86) Internationale Anmeldenummer: PCT/DE2014/200170
(87) Internationale Veröffentlichungsnummer: WO 2014/180475

(56) Entgegenhaltungen:
- DE-A1-102009 042 836
- DE-A1-102012 211 216
- FR-A1- 2 982 335
- FR-A1- 2 990 736

## Beschreibung

Die Erfindung betrifft ein Fliehkraftpendel. Insbesondere betrifft die Erfindung ein Fliehkraftpendel mit einer Pendelmasse und einem elastischen Element zur Begrenzung eines Pendelwegs der Pendelmasse. Das Dokument DE 10 2009 042 836 A1 offenbart alle Merkmale des Oberbegriffs des Anspruchs 1 und bildet somit den nächstliegenden Stand der Technik. Ein Fliehkraftpendel ist eine Art Schwingungstilger zur Dämpfung von Dreh- bzw. Torsionsschwingungen. Das Fliehkraftpendel umfasst einen Pendelflansch und eine oder mehrere Pendelmassen, die in der Drehebene verschiebbar am Pendelflansch gelagert sind. Unterliegt eine Drehung des Pendelflanschs um seine Drehachse einer Ungleichförmigkeit, so bewirkt diese eine Verschiebung der Pendelmasse am Pendelflansch, wodurch diese Energie zwischenspeichert und dabei die Ungleichförmigkeit abbaut.
Üblicherweise ist eine Kulissenführung vorgesehen, um die Pendelmasse auf einem Pendelweg zu führen und den Pendelweg zu begrenzen. Gelangt die Pendelmasse an ein Ende des Pendelwegs, so schlägt üblicherweise ein Bolzen der Kulissenführung an einer Begrenzung einer Aussparung an, wodurch die Bewegung der Pendelmasse zum Stillstand kommt. Das Anschlagen kann zu einer Geräuschbelastung führen, die als unangenehm empfunden werden kann. Außerdem kann durch das harte Anschlagen eine Lebensdauer des Fliehkraftpendels, insbesondere der Kulissenführung, verkürzt sein.
Bekannt sind Fliehkraftpendel, an denen eines oder mehrere elastische Elemente auf der Basis eines Elastomers angeordnet sind, um die Pendelmasse verlangsamt abzubremsen und ein Anschlaggeräusch zu dämpfen. Es hat sich gezeigt, dass ein Elastomer zu diesem Zweck jedoch nur bedingt geeignet ist, da es seine volle Wirksamkeit nur in einem begrenzten Temperaturbereich entfaltet, oberhalb und unterhalb dieses Temperaturbereichs kann es einem erhöhten Verschleiß ausgesetzt sein. Außerdem kann ein Elastomer empfindlich gegenüber einer Kante sein, gegen die es anschlägt. Bei längerem Gebrauch kann im Bereich der Kante ein Riss im Elastomer entstehen. Dadurch kann ein Teil des Elastomers abbrechen, sodass das Elastomer seine Wirkung nicht mehr voll entfalten kann. Das abgebrochene Stück Elastomer kann sich darüber hinaus im Bereich des Fliehkraftpendels unkontrolliert bewegen und einen hydraulischen oder mechanischen Folgeschaden verursachen.

Es ist daher Aufgabe der Erfindung, ein Fliehkraftpendel mit einem verbesserten Schutz gegen Anschlagen einer Pendelmasse bereitzustellen. Die Erfindung löst diese Aufgabe mittels eines Fliehkraftpendels mit den Merkmalen des unabhängigen Anspruchs. Unteransprüche geben bevorzugte Ausführungsformen wieder.

Ein erfindungsgemäßes Fliehkraftpendel umfasst einen Pendelflansch, eine Pendelmasse und eine Kulissenführung zur Führung der Pendelmasse am Pendelflansch auf einem vorbestimmten Pendelweg. Zur Abbremsung der Pendelmasse gegenüber dem Pendelflansch ist im Bereich eines Endes des Pendelwegs ein Federelement angeordnet.

Durch Verwenden eines Federelements anstelle eines Elastomers kann die Pendelmasse mit verbesserter Standfestigkeit vom harten Anschlagen am Ende der Kulissenführung abgehalten werden. Eine Wahrscheinlichkeit eines Folgeschadens durch ein desintegrierendes Federelement kann vermindert sein. Außerdem kann das Federelement innerhalb einer größeren Spanne von Umgebungsbedingungen, insbesondere variierenden Temperaturen, eingesetzt werden. Auch eine Festigkeit des Federelements gegenüber chemischer Korrosion oder korrosiver Alterung, beispielsweise durch einen Kontakt mit Öl, kann verbessert sein.

In einer bevorzugten Ausführungsform weist der Pendelweg zwei Enden auf und das Federelement ist zur Abbremsung der Pendelmasse im Bereich beider Enden eingerichtet. So kann nur ein Federelement zur Abbremsung der Pendelmasse an gegenüberliegenden Enden des Pendelwegs verwendet werden. Eine Anzahl benötigter Elemente des Fliehkraftpendels kann dadurch verringert sein, wodurch sowohl die Herstellbarkeit verbessert als auch eine Ausfallwahrscheinlichkeit verringert sein können.

Bevorzugterweise trägt die Pendelmasse eine erste Aussparung und der Pendelflansch eine zweite Aussparung. Dabei liegt das Federelement in der Drehebene derart in den Aussparungen, dass seine Enden gleichzeitig an Begrenzungen einer der Aussparungen anliegen. Das Federelement kann auf diese Weise immer dann komprimiert werden, wenn die Aussparungen gegeneinander werden bzw. die Pendelmasse gegenüber dem Pendelflansch weit genug verschoben wird. Durch die Anlage beider der Enden des Federelements in Kompressionsrichtung an den Begrenzungen kann das Federelement in seiner Position fixiert sein. Zusätzliche Geräusche durch ein Verschieben des Federelements können so vermieden werden.

Weiter bevorzugt ist, dass das Federelement vorgespannt ist. Dadurch kann eine Kompression des Federelements erst dann bewirkt werden, wenn die Pendelmasse bezüglich des Pendelflanschs eine Bewegung mit einem vorbestimmten Impuls vollführt. Der durch das Federelement gebildete Anschlag kann so vornehmlich dann in Aktion treten, wenn eine relativ hohe Energie abzubauen ist.

Die Pendelmasse kann zwei miteinander verbundene Masseelemente umfassen, die auf unterschiedlichen Seiten des Pendelflanschs liegen, wobei die in den Masseelementen liegenden ersten Aussparungen so bemessen sind, dass das Federelement gegen axiales Herausfallen gesichert ist. Eine weitere Fixierung, beispielsweise mittels eines Ausstellfensters oder eines zusätzlichen Elements kann so eingespart sein. Das Fliehkraftpendel kann so axial nur wenig Raum erfordern.

Bevorzugterweise trägt dabei wenigstens eine Begrenzung der ersten Aussparung im Masseelement eine Fase zur Anlage des Federelements. Durch die Fase kann der für das Federelement zur Verfügung stehende Bauraum auf einfache Weise vergrößert sein. Außerdem kann eine Anlagefläche zwischen dem Federelement und dem Masseelement vergrößert sein, wodurch auftretende Kräfte besser verteilt sein können.

In einer ersten Variante umfasst das Federelement eine gerade Schraubenfeder. In einer Ausführung als Druckfeder muss die Schraubenfeder üblicherweise nicht gegen Überlastung geschützt werden, da sie eine Kompression automatisch begrenzt, wenn ihre Windungen aneinander anliegen.

In einer zweiten Alternative umfasst das Federelement eine Bogenfeder. Insbesondere dann, wenn die Enden des Pendelwegs einander nicht gegenüberliegen, sondern, bezogen auf die Bewegungsbahn des Pendelflanschs, einen Winkel miteinander einschließen, kann durch die Verwendung der Bogenfeder eine verbesserte Einleitung von Kräften beim Anschlagen der Pendelmasse erzielt sein.

In einer weiteren Ausführungsform kann zusätzlich zum Federelement ein elastomeres Anschlagelement vorgesehen sein. Das elastomere Anschlagelement kann insbesondere innerhalb des Federelements angeordnet sein. Das Anschlagelement kann jedoch auch an anderer Stelle bereitgestellt sein, beispielsweise im Bereich eines Bolzens der erwähnten oder einer weiteren Kulissenführung.

Die Erfindung wird nun mit Bezug auf die beigefügten Figuren genauer beschrieben, in denen:
- Fig. 1: eine erste Ansicht eines Fliehkraftpendels mit gerader Schraubenfeder;
- Fig. 2: eine zweite Ansicht des Fliehkraftpendels von Fig. 1;
- Fig. 3: eine perspektivische Darstellung eines Schnitts durch eine Pendelmasse des Fliehkraftpendels der Figuren 1 und 2;
- Fig. 4: eine erste Ansicht einer weiteren Ausführungsform des Fliehkraftpendels der Figuren 1 und 2, und
- Fig. 5: eine zweite Ansicht des Fliehkraftpendels von Fig. 4
darstellt.

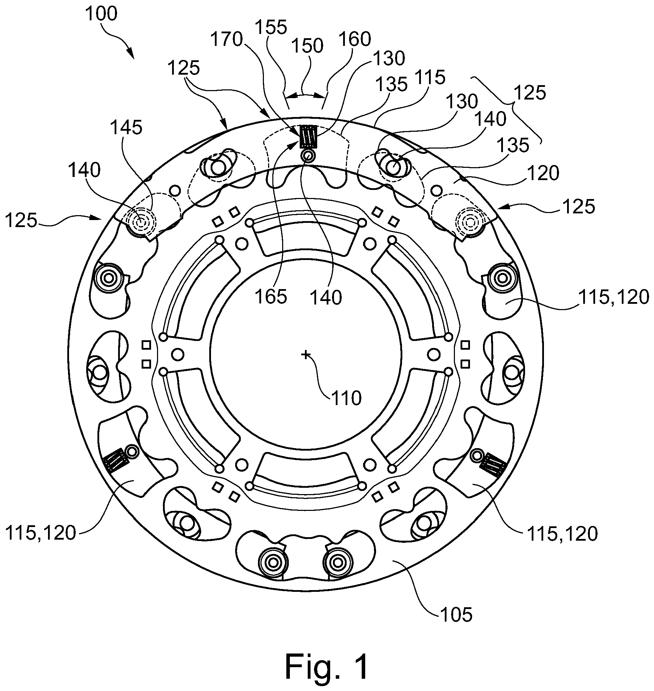

Fig. 1 zeigt eine erste Ansicht eines Fliehkraftpendels 100 zur Tilgung von Dreh- bzw. Torsionsschwingungen, insbesondere in einem Antriebsstrang eines Kraftfahrzeugs. Das Fliehkraftpendel 100 umfasst einen Pendelflansch 105 mit einer Drehachse 110 sowie eine oder mehrere Pendelmassen 115. In der dargestellten Ausführungsform ist jede Pendelmasse 115 gebildet durch ein erstes und ein zweites Masseelement 120, die auf unterschiedlichen axialen Seiten des Pendelflanschs 105 liegen. Die Pendelmassen 115 stehen in der Darstellung jeweils in einer neutralen Position. Von den beispielhaft dargestellten drei Pendelmassen 115 ist von den unteren beiden jeweils nur das vom Betrachter entfernte Masseelement 120 dargestellt. Von der dritten, oben dargestellten Pendelmasse 115 ist das dem Betrachter zugewandte Masseelement 120 transparent dargestellt.

Jede Pendelmasse 115 ist mittels einer oder mehreren Kulissenführungen 125 in der Drehebene des Pendelflanschs 105 verschiebbar an diesem angebracht. Üblicherweise werden wenigstens zwei Kulissenführungen 125 verwendet; in der dargestellten Ausführungsform sind fünf Kulissenführungen 125 für jede Pendelmasse 115 vorgesehen. Jede Kulissenführung 125 umfasst eine erste Aussparung 130 in der Pendelmasse 115 bzw. dem oder den Masseelementen 120 und/oder eine zweite Aussparung 135 im Pendelflansch 105 sowie einen Bolzen 140. Der Bolzen 140 kann eine Rolle 145 tragen, wobei die Rolle 145 mittels eines Lagers am Bolzen 140 angebracht sein kann. Die Pendelmasse 115 kann entlang eines Pendelwegs 150 bezüglich des Pendelflanschs 105 verschoben werden, bis einer oder mehrere Bolzen 140 bzw. eine oder mehrere Rollen 145 an einem ersten Ende 155 oder einem zweiten Ende 160 des Pendelwegs 150 an eine der Begrenzungen der Aussparungen 130, 135 anschlägt.

Um ein hartes Anschlagen zu vermeiden, ist ein Federelement 165 vorgesehen, das in der vorliegenden Ausführungsform als gerade Schraubenfeder ausgebildet ist. Das Federelement 165 ist vorzugsweise aus einem Stahl gefertigt und weiter vorzugsweise als Druckfeder ausgeführt. In einer weiteren Ausführungsform ist zusätzlich zum Federelement 165 ein elastomeres Anschlagelement 170 vorgesehen, das beispielsweise koaxial zum Federelement 165 angeordnet sein kann, insbesondere falls das Federelement 165 eine Schraubenfeder umfasst.

Das Federelement 165 ist in der gezeigten Ausführungsform an der Pendelmasse 115 angebracht, kann in einer anderen Ausführungsform jedoch auch am Pendelflansch 105 angebracht sein. Bewegt sich die Pendelmasse 115 entlang des Pendelwegs 150 in den Bereich eines der Enden 155 oder 160 des Pendelwegs 150, so gelangt eines der Enden des Federelements 165 in Eingriff mit einer Begrenzung der vorliegend zweiten Aussparung 135, noch bevor einer der Bolzen 140 bzw. eine der Rollen 145 die Bewegung der Pendelmasse 115 bezüglich des Pendelflanschs 105 stoppt. Dadurch wird die Pendelmasse 115 in ihrer Bewegung entlang des Pendelwegs 150 an dessen Ende 155, 160 mittels des Federelements 165 elastisch abgebremst.

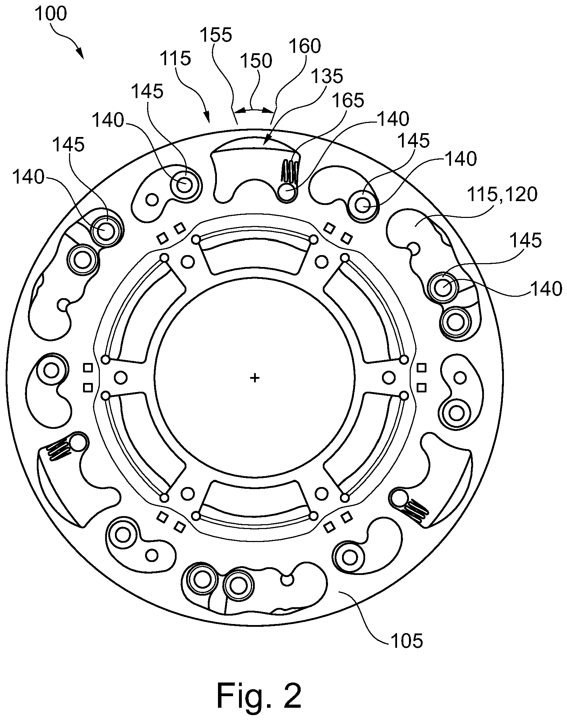

Fig. 2 zeigt eine zweite Ansicht des Fliehkraftpendels 100 von Fig. 1. Die Darstellung erfolgt entsprechend der von Fig. 1, mit dem Unterschied, dass alle dem Betrachter zugewandten Masseelemente 120 nicht dargestellt sind und die Pendelmassen 115 im Uhrzeigersinn ihre Pendelwege 150 in der gleichen Richtung bezüglich der Drehachse 110 durchlaufen haben.

Ein in der Darstellung von Fig. 2 rechtes Ende des Federelements 165 steht in Eingriff mit einer Begrenzung der zweiten Aussparung 135 im Pendelflansch 105. In der dargestellten Ausführungsform liegen, solange das Federelement 165 unkomprimiert ist, dessen beide einander gegenüberliegende Enden an Begrenzungen der ersten Aussparung 130 in der Pendelmasse 115 bzw. in den beiden Masseelementen 120 an. Wird die Pendelmasse 115 in der gezeigten Position also weiter in Richtung des rechten Endes 160 des Pendelwegs 150 bewegt, so wird zunächst das Federelement 165 komprimiert, bevor einer der Bolzen 140 oder eine der Rollen 145 die Bewegung der Pendelmasse 115 begrenzt.

Durch die Anbringung des Federelements 165 in der ersten Aussparung der Pendelmasse 115 so, dass beide Enden des Federelements 165 an Begrenzungen der ersten Aussparung anliegen, kann die gleiche Federwirkung erzielt werden, wenn die Pendelmasse 115 im Bereich des anderen Endes 155 des Pendelwegs 150 abgebremst werden soll. Eine beidseitig wirkende Anordnung ist auch möglich, wenn das Federelement 165 am Pendelflansch 105 statt an der Pendelmasse 115 angebracht ist. In einer bevorzugten Ausführungsform liegt das Federelement 165 unter Vorspannung in der entsprechenden Aussparung 130, 135, noch bevor es weiter komprimiert wird, um die Bewegung der Pendelmasse 115 abzubremsen.

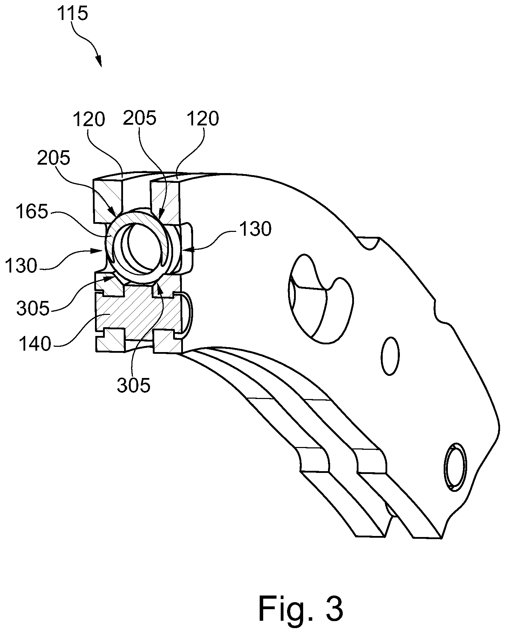

Fig. 3 zeigt eine perspektivische Darstellung eines Schnitts durch eine Pendelmasse 115 des Fliehkraftpendels 100 der Figuren 1 und 2. Dabei verläuft die Schnittebene durch das Federelement 165 und den benachbarten, optionalen Bolzen 140. Es ist zu sehen, dass das Federelement 165, bezogen auf die Drehachse 110, axial zwischen den Masseelementen 120 angeordnet ist. Die ersten Aussparungen 130 sind in ihrer Größe so gewählt, dass das Federelement 165 in axialer Richtung gegen Herausfallen gesichert ist. In der dargestellten, bevorzugten Ausführungsform weisen Begrenzungen der ersten Aussparung 130 zusätzlich Fasen 305 in Bereichen auf, in denen das Federelement 165 in axialer Richtung an ihnen anliegt.

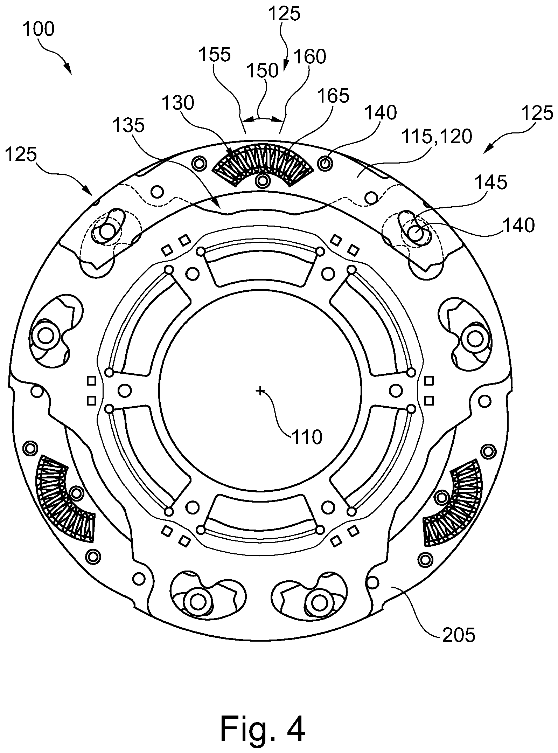

Fig. 4 zeigt eine erste Ansicht einer weiteren Ausführungsform des Fliehkraftpendels 100 der Figuren 1 und 2. Die Darstellung erfolgt entsprechend der von Fig. 1, mit den maßgeblichen Unterschieden, dass die Kulissenführungen 125 anders gestaltet sind und das Federelement 165 eine Bogenfeder umfasst.

In der dargestellten Ausführungsform sind für jede Pendelmasse 115 exemplarisch nur drei Kulissenführungen 125 vorgesehen. Die Pendelmassen 115 befinden sich wie in Fig. 1 in Neutralstellungen. An der mittleren Kulissenführung 125 ist die zweite Aussparung 135 im Pendelflansch 305 so groß, dass die Aussparung 135 auf einer radialen Außenseite nicht mehr durch Material des Pendelflanschs 305 begrenzt ist. Das Federelement 165 ist derart bogenförmig, dass seine Enden senkrecht auf Begrenzungen der zweiten Aussparung 135 zulaufen, wenn die Pendelmasse 115 in den Bereich eines der Enden ihres Pendelwegs 150 gelangt. In der dargestellten Ausführungsform schließen die Enden des Federelements 165 in der Neutralstellung einen Winkel von ca. 120 - 150° ein. Das Federelement 165 ist auch hier an der Pendelmasse 115 angebracht, obwohl es in einer anderen Ausführungsform umgekehrter am Pendelflansch 105 angebracht sein kann.

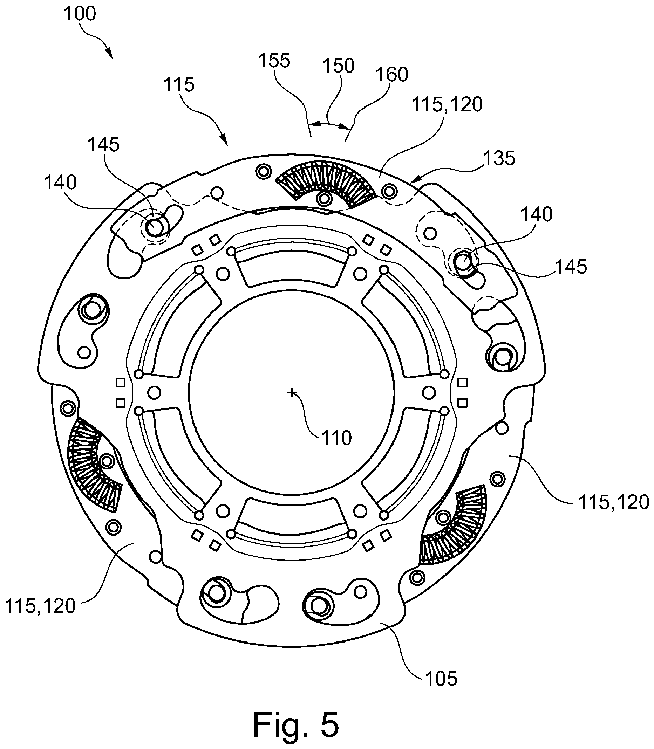

Fig. 5 zeigt eine zweite Ansicht des Fliehkraftpendels 100 von Fig. 4. Analog zur Darstellung von Fig. 2 befinden sich die Pendelmassen 115 jeweils im Bereich eines im Uhrzeigersinn liegenden Endes 160 ihres jeweiligen Pendelwegs 150. Das Federelement 165 liegt an einer Begrenzung der zweiten Aussparung 135 an, ist aber noch nicht komprimiert. Die Bolzen 140 bzw. Rollen 145 lassen noch etwas Spielraum für die Bewegung der Pendelmasse 115, während das Federelement 165 komprimiert wird, um die Bewegung verlangsamt zu verzögern.

### Bezugszeichenliste

- 100: Fliehkraftpendel
- 105: Pendelflansch
- 110: Drehachse
- 115: Pendelmasse
- 120: Masseelement
- 125: Kulissenführung
- 130: erste Aussparung
- 135: zweite Aussparung
- 140: Bolzen
- 145: Rolle
- 150: Pendelweg
- 155: erstes Ende
- 160: zweites Ende
- 165: Federelement
- 170: elastomeres Anschlagelement

- 305: Fase

## Patentansprüche

1. Fliehkraftpendel (100), umfassend:
- einen Pendelflansch (105);
- eine Pendelmasse (115);
- eine Kulissenführung (125) zur Führung der Pendelmasse (115) am Pendelflansch (105) auf einem vorbestimmten Pendelweg (150) wobei
- ein Federelement (165) zur Abbremsung der Pendelmasse (115) gegenüber dem Pendelflansch (105) im Bereich eines Endes (155, 160) des Pendelwegs (150), wobei die Pendelmasse (115) eine erste Aussparung (130) trägt;
- der Pendelflansch (105) eine zweite Aussparung (135) trägt;**dadurch gekennzeichnet, dass**
- das Federelement (165) in der Drehebene derart in den Aussparungen (130, 135) liegt, dass seine Enden gleichzeitig an Begrenzungen einer der Aussparungen (130, 135) anliegen.

2. Fliehkraftpendel (100) nach Anspruch 1, wobei der Pendelweg (150) zwei Enden (155, 160) aufweist und das Federelement (165) zur Abbremsung der Pendelmasse (115) im Bereich beider Enden (155, 160) eingerichtet ist.

3. Fliehkraftpendel (100) nach Anspruch 1 oder 2, wobei das Federelement (165) vorgespannt ist.

4. Fliehkraftpendel (100) nach einem der Ansprüche 1 bis 3, wobei die Pendelmasse (115) zwei miteinander verbundene Masseelemente (120) umfasst, die auf unterschiedlichen Seiten des Pendelflanschs (105) liegen, und die in den Masseelementen (120) liegenden ersten Aussparungen (130) so bemessen sind, dass das Federelement (165) gegen axiales Herausfallen gesichert ist.

5. Fliehkraftpendel (100) nach Anspruch 4, wobei eine Begrenzung der ersten Aussparung (130) im Masseelement (120) eine Fase (305) zur Anlage des Federelements (165) trägt.

6. Fliehkraftpendel (100) nach einem der vorangehenden Ansprüche, wobei das Federelement (165) eine gerade Schraubenfeder umfasst.

7. Fliehkraftpendel (100) nach einem der Ansprüche 1 bis 5, wobei das Federelement (165) eine Bogenfeder umfasst.

8. Fliehkraftpendel (100) nach einem der vorangehenden Ansprüche, wobei innerhalb des Federelements (165) ein elastomeres Anschlagelement angeordnet ist.

## Claims

1. Centrifugal force pendulum (100), comprising:
- a pendulum flange (105);
- a pendulum mass (115);
- a slotted guide (125) for guiding the pendulum mass (115) on the pendulum flange (105) along a predefined pendulum path (150)
- a spring element (165) for braking the pendulum mass (115) with respect to the pendulum flange (105) in the region of an end (155, 160) of the pendulum path (150), the pendulum mass (115) carrying a first cut-out (130);
- the pendulum flange (105) carrying a second cut-out (135);
**characterized in that**
- the spring element (165) lies in the rotary plane in the cut-outs (130, 135) in such a way that its ends at the same time bear against boundaries of one of the cut-outs (130, 135).

2. Centrifugal force pendulum (100) according to Claim 1, the pendulum path (150) having two ends (155, 160), and the spring element (165) being set up to brake the pendulum mass (115) in the region of the two ends (155, 160).

3. Centrifugal force pendulum (100) according to Claim 1 or 2, the spring element (165) being prestressed.

4. Centrifugal force pendulum (100) according to one of Claims 1 to 3, the pendulum mass (115) comprising two mass elements (120) which are connected to one another and lie on different sides of the pendulum flange (105), and the first cut-outs (130) which lie in the mass elements (120) being dimensioned in such a way that the spring element (165) is secured against falling out axially.

5. Centrifugal force pendulum (100) according to Claim 4, a boundary of the first cut-out (130) in the mass element (120) carrying a chamfer (305) for the contact of the spring element (165).

6. Centrifugal force pendulum (100) according to one of the preceding claims, the spring element (165) comprising a straight helical spring.

7. Centrifugal force pendulum (100) according to one of Claims 1 to 5, the spring element (165) comprising a bow spring.

8. Centrifugal force pendulum (100) according to one of the preceding claims, an elastomeric stop element being arranged within the spring element (165).

## Revendications

1. Pendule inertiel (100) comprenant :
une bride (105) de pendule,
une masse (115) de pendule,
un guide coulissant (125) qui guide la masse (115) du pendule sur la bride (105) du pendule le long d'un parcours pendulaire (150) prédéterminé,
un élément élastique (165) destiné à freiner la masse (115) du pendule par rapport à la bride (105) du pendule étant prévu au niveau d'une extrémité (155, 160) du parcours (150) pendulaire,
la masse (115) du pendule portant une première découpe (130),
la bride (105) du pendule portant une deuxième découpe (135),
**caractérisé en ce que**
l'élément élastique (165) est situé dans le plan de rotation et disposé dans les découpes (130, 135) de telle sorte que ses extrémités reposent simultanément sur les frontières de l'une des découpes (130, 135).

2. Pendule inertiel (100) selon la revendication 1, dans lequel le parcours pendulaire (150) présente deux extrémités (155, 160) et l'élément élastique (165) est destiné à freiner la masse (115) du pendule au niveau des deux extrémités (155, 160).

3. Pendule inertiel (100) selon les revendications 1 ou 2, dans lequel l'élément élastique (165) est précontraint.

4. Pendule inertiel (100) selon l'une des revendications 1 à 3, dans lequel la masse (115) du pendule comporte deux éléments de masse (120) reliés l'un à l'autre et disposés sur les côtés différents de la bride (105) du pendule, les premières découpes (130) disposées dans les éléments de masse (120) étant dimensionnées de telle sorte que l'élément élastique (165) soit empêché de sortir axialement.

5. Pendule inertiel (100) selon la revendication 4, dans lequel une frontière de la première découpe (130) ménagée dans l'élément de masse (120) porte un chanfrein (305) permettant le placement de l'élément élastique (165).

6. Pendule inertiel (100) selon l'une des revendications précédentes, dans lequel l'élément élastique (165) comporte un ressort hélicoïdal rectiligne.

7. Pendule inertiel (100) selon l'une des revendications 1 à 5, dans lequel l'élément élastique (165) comporte un ressort en arc.

8. Pendule inertiel (100) selon l'une des revendications précédentes, dans lequel un élément de butée en élastomère est disposé à l'intérieur de l'élément élastique (165).
